## Europäisches Patentamt
## European Patent Office
## Office européen des brevets

(19)

(11) Publication number: **0 147 167 A2**

# EUROPEAN PATENT APPLICATION

(21) Application number: 84308889.9

(51) Int. Cl.⁴: **C 01 F 7/14**

(22) Date of filing: 19.12.84

(30) Priority: 22.12.83 US 564291

(43) Date of publication of application:
03.07.85 Bulletin 85/27

(84) Designated Contracting States:
AT BE CH DE FR GB IT LI LU NL SE

(71) Applicant: ALUMINUM COMPANY OF AMERICA
Alcoa Building
Pittsburgh Pennsylvania(US)

(72) Inventor: Pearson, Alan
4117 Dundee Drive
Murrysville Pennsylvania(US)

(72) Inventor: Fleming, Hubert L.
2805 Camelot Drive
Lower Burrell Pennsylvania(US)

(72) Inventor: Larrousse, Mark F.
2646 Storschein Road Apt. 5
Monroeville Pennsylvania(US)

(74) Representative: Baillie, Iain Cameron et al,
c/o Ladas & Parry Isartorplatz 5
D-8000 München 2(DE)

(54) Continuous process for neutralization of aluminate solution to form gels and appartatus therefor.

(57) Alumina gel is produced on a continuous basis in a stirred reactor into which is bubbled carbon dioxide to neutralize an aluminate solution feeding into the reactor. Careful control of the process parameters, including pH, residence time, temperature and gas flow rate, as well as the geometry of the reactor and other apparatus parameters, can result in the formation of preselected types of gel. When pseudoboehmite is formed in accordance with the invention, alumina gels can be formed with surface areas as high as 300 to 700 square meters per gram.

./...

FIGURE 1

## CONTINUOUS PROCESS FOR NEUTRALIZATION OF ALUMINATE
## SOLUTION TO FORM GELS AND APPARATUS THEREFOR

This invention relates to the production of alumina gel. More particularly, this invention relates to a process and apparatus for the continuous production of alumina gel by neutralization with carbon dioxide.

Finely divided alumina hydrates produced from gelatinous precipitates are useful as fillers or pigments. Alumina gels are also useful in the production of catalyst supports, selective adsorbants and desiccants, particularly when the surface area is high either by controlling the particle size or the porosity of the particles.

It is known to produce the alumina gel by the neutralization, with carbon dioxide gas, of a sodium aluminate solution, such as the solution which results from the digestion of bauxite by the well known Bayer process. Such a process, for example, is shown in Wall U.S. Patent 2,247,624. The resultant precipitate is conventionally washed with water and then aged for a period of time which may be as long as many days to obtain the desired trihydrate or monohydrate form of alumina hydrate. Such a process is described in Teter U.S. Patent 2,973,245.

While such prior art processes result in the production of satisfactory alumina gels, it would be desirable to produce the gels on a continuous basis and without the need for subsequent time consuming aging. It would also be desirable to produce gels having surface areas higher than the 300 square meters per gram which is the best conventionally produced surface area to date.

It is, therefore, an object of the invention to provide a process and apparatus for the continuous production of alumina gel by the neutralization of an aluminate solution.

It is another object of the invention to provide a process and apparatus for the continuous production of alumina gel by the neutralization of aluminate solution to form gels having a high surface area.

It is yet another object of the invention to provide a process and apparatus for the continuous production of alumina gel by the neutralization of aluminate solution without the need for time consuming subsequent aging of the gel to produce a desired crystal form.

It is a further object of the invention to provide a process and apparatus for the continuous production of alumina gel by the neutralization of an aluminate solution wherein the process and apparatus parameters may be controlled to produce a desired crystal form of alumina gel.

These and other objects of the invention will be apparent from the following description and accompanying drawings.

Figure 1 is a cross-sectional schematic view of an apparatus suitable for use in the practice of the invention.

Figure 2 is a graph showing the gel product variation as a function of the reaction pH for various temperatures.

Figure 3 is a graph showing the gel formation reaction rate versus reaction temperature.

Figure 4 is a graph showing the product type as a function of residence time and reaction temperature.

Figure 5 is a graph showing the gel crystal size variation as a product of temperature and residence time.

Figure 6 is a system diagram of a preferred embodiment of the apparatus of the invention.

Figure 7 is a kinetic phase diagram illustrating the production of various alumina gel phases from a synthetic sodium aluminate liquor for a particular residence time as a function of reactor temperature and total caustic (TC) concentration.

Figure 8 is a kinetic phase diagram illustrating the production of various alumina gel phases from a synthetic sodium aluminate liquor for a particular total caustic (TC) concentration as a function of reactor temperature and residence time.

Figure 9 is a kinetic phase diagram similar to Figure 8 with a different total caustic (TC) concentration and a different alumina to caustic ratio.

Figure 10 is a kinetic phase diagram similar to Figure 8 with a different alumina to caustic ratio and using a synthetic sodium aluminate liquor having typical commercial impurities.

Figure 11 is a kinetic phase diagram similar to Figure 10 with a different total caustic (TC) concentration.

Figure 12 is a kinetic phase diagram similar to Figure 8 but using a higher pH in the reactor.

Figure 13 is a kinetic phase diagram similar to Figure 8 but using a lower pH in the reactor.

Alumina gel, from which can be recovered a number of product types as will be explained, is continuously produced in a stirred reactor into which is pumped a sodium aluminate liquor. The liquor is neutralized in the reactor by contacting it with a neutralizing agent which will lower the pH to a preselected level. The type of product which can be recovered from the alumina gel may be varied by varying one or more of the process parameters (including reactor temperature, residence time, pH, total caustic concentration and alumina to caustic ratio) utilized in producing the alumina gel.

The use of the term alumina gel is meant to include amorphous or crystalline aluminum-containing product such as amorphous alumina, boehmite, pseudoboehmite, bayerite, gibbsite and dawsonite, as well as mixtures thereof, or such products or mixtures thereof containing selected modifying materials such as silica, gallium, or other caustic-soluble material.

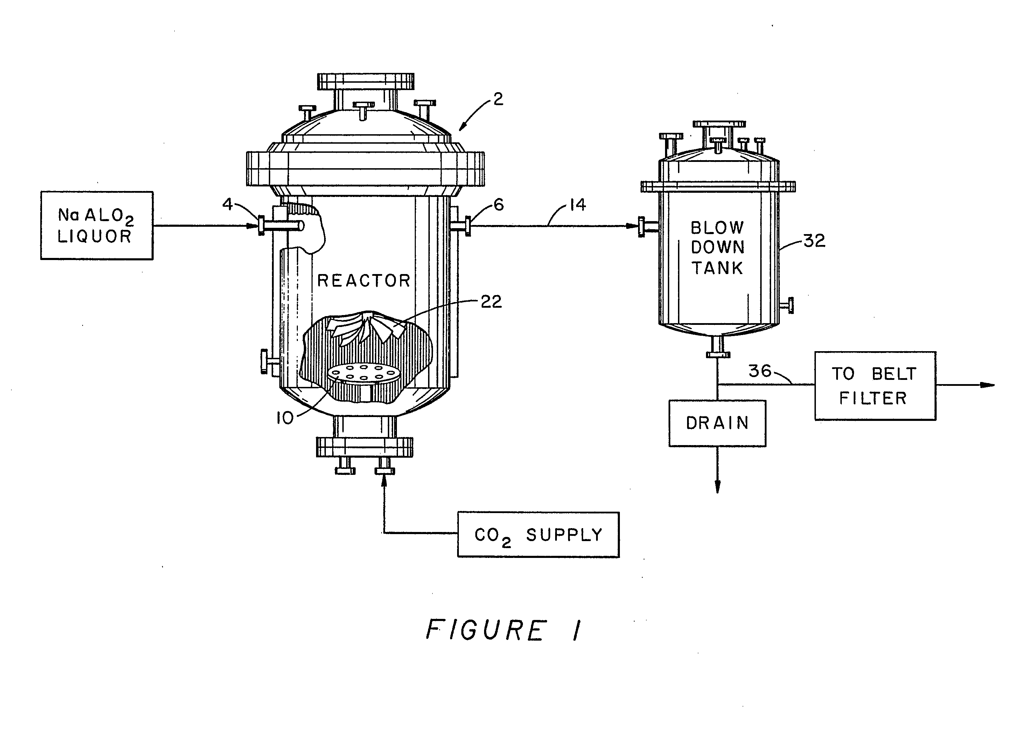

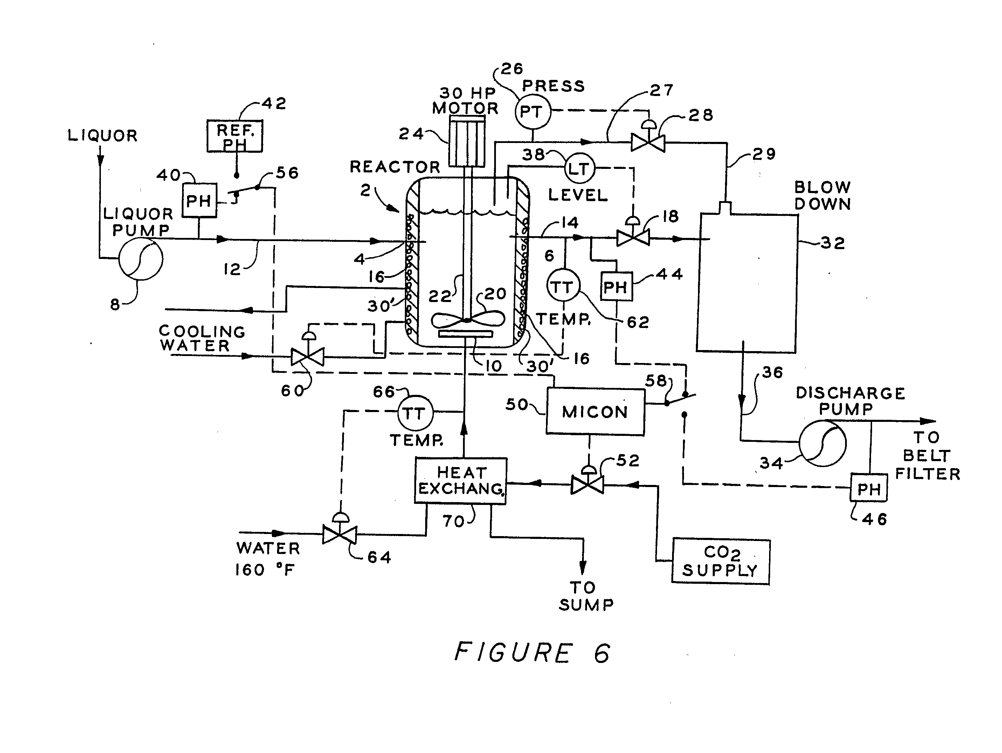

Referring now to Figures 1 and 6, the production of alumina gel on a continuous basis is carried out in a stirred reactor 2 into which a continuous stream of an aluminate solution is pumped through line 12 by pump 8 to an entrance port 4. A neutralizing agent such as carbon dioxide gas is bubbled through reactor 2 from a sparger ring 10 and the product gel which forms by the neutralization of the aluminate solution naturally flocculates and is removed on a continuous basis as a gel slurry through an exit port 6. The slurry flows via line 14 through valve 18 to blow-down tank 32. The slurry then is pumped through line 36 by pump 34 to a filtration station. The resulting gel product may then be washed with water and dried to recover the desired alumina hydrate product.

Reactor 2 is preferably a cylindrical reactor having a height to diameter ratio of not more than 1.3:1 and preferably of approximately 1:1. This particular dimension is preferred, in accordance with the invention, due to the discovery that the bulk carbon dioxide mass transfer rate is increased by decreasing the liquid height, but this effect is negligible compared to the additional mass transfer of carbon dioxide through the gas bubble interface at increased liquid height. Ratios greater than 1.3:1 will result in vortex formation and subsequent inefficient mixing.

Reactor 2 should be baffled to initiate radial dispersion and assist in actual dispersion of the liquids during the agitation. Design considerations based on transport data indicate an optimum design of four radially symmetrical baffles extending the length of the reactor, two of which are illustrated at 16.

The reactor is preferably stirred using a coaxially mounted multi-bladed central turbine agitator 20, such as, for example, a shrouded six-bladed turbine. Turbine 20 is mounted on a shaft 22 which is rotated at a speed of from 480 to 1000 rmp, preferably about 850 rmp, by a motor 24. The diameter of agitator 20 with respect to the diameter of reactor tank 2 should not exceed a ratio of 0.22.

The pressure within reactor 2 is maintained at a level of from about atmosphere to about 100 psi, preferably 50-100 psi, by a pressure monitor 26 in line 27 which controls a valve 28 permitting excess pressure to be vented, via lines 27 and 29, into blow-down tank 32. Pressure monitor 26 may comprise a commercially available unit.

The flow of gel slurry from reactor 2 via exit port 6 and exit line 14 into blow-down tank 32 is regulated by valve 18 which is controlled by level monitor 38 which may comprise a commercially available unit.

The aluminate liquor feed stream fed into reactor 2 through port 4 should contain a caustic level of about 20 to 200 grams per liter (expressed as $Na_2CO_3$) and preferably about 50-150 grams per liter. The liquor feed should have an alumina to caustic ratio of from 0.3 to 0.9, preferably 0.5 to 0.8. The rate of feed into the reactor, and gel product removal from the reactor, with respect to the volume of the reactor, should be such to permit a residence time, within reactor 2, of from 0.5 to 30 minutes and typically to 2 to 12 minutes, depending upon the desired product.

As previously stated, the incoming caustic aluminate feed liquor is neutralized by contacting the liquor with a neutralizing agent which may comprise either a liquid or a gas. If a gas is used, the gas may comprise $HCl$, $SO_3$, $H_2S$, $NO_2$, $CO_2$ or any other gas which is soluble in the sodium aluminate liquor and capable of reacting with caustic to lower the pH to the desired range. Sulfuric acid or nitric acid are examples of liquids which may be used as well as any other liquid miscible with the sodium aluminate liquor and capable of reacting with the caustic to lower the pH to the desired range. In a preferred embodiment, the neutralizing agent comprises a gas containing carbon dioxide which is bubbled through reactor 2.

The carbon dioxide gas is, preferably, centrally emitted from a sparger means, such as sparger ring 10 in Figures 1 and 6, which preferably is coaxially mounted below turbine blades 20 at the bottom of reactor 2. The orifice sizes in sparger ring 10 should not exceed 7 mm with not more than 20 openings at this size. The minimum orifice size should not be less than 0.78 mm. The size range is selected to provide inlet bubbles which will not exceed 7 mm in diameter since the interfacial area will show significant decrease with bubbles larger in size. Furthermore, plugging and subsequent scaling of the orifice will result if larger orifice sizes or a greater number of inlets is used because of the reduced superficial gas velocity. Since the actual bubble size after agitation is approximately 0.78 mm, the orifice size may be decreased with a linearly increased number of openings down to a limit of 0.78 mm without resulting in any plugging. Thus, a total cross-sectional area of the inlets in sparger means 10 should not exceed about 770 square millimeters.

The carbon dioxide gas flow rate, with respect to the rate of incoming caustic/aluminate feed, should be such to maintain an operating pH of from 8.5 to 12, depending upon the desired product. The pH should be monitored continuously in the product slurry, possibly in a small diluted side stream. As shown in Figure 6, the pH of the incoming liquor is monitored at 40 and the measurement is fed to control unit 50 which, in turn, controls the flow of carbon dioxide into reactor 2 via valve 52. The pH of the gel slurry leaving reactor 2 through exit port 6 is also monitored at 44 in line 14 and at 46 in line 36 as the gel slurry is pumped out of blow-down tank 32 by pump 34. A reference pH 42 is also provided for a comparison of the pH values being measured at 40, 44 and 46 in the process with a reference value. As shown in Figure 6, switches 56 and 58 may be provided to alternatively measure reference pH 42 and the pH at the described points in the process. If the measured pH rises beyond the desired operating level at any of the monitored points, control unit 50 compensates for this by increasing the flow of carbon dioxide gas into reactor 2 via valve 52. The flow of carbon dioxide gas is similarly decreased if the pH drops below the desired operating range.

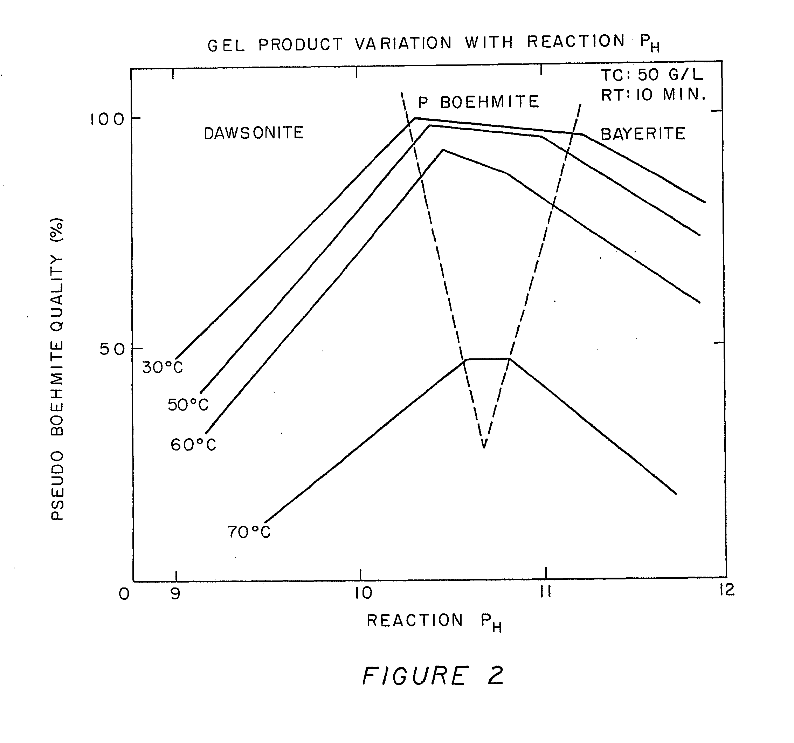

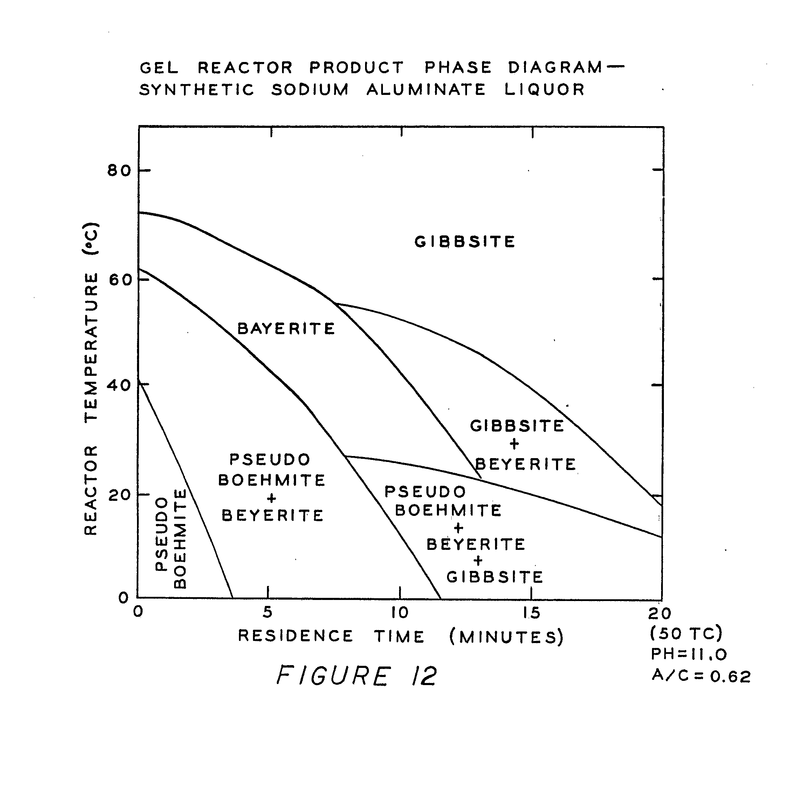

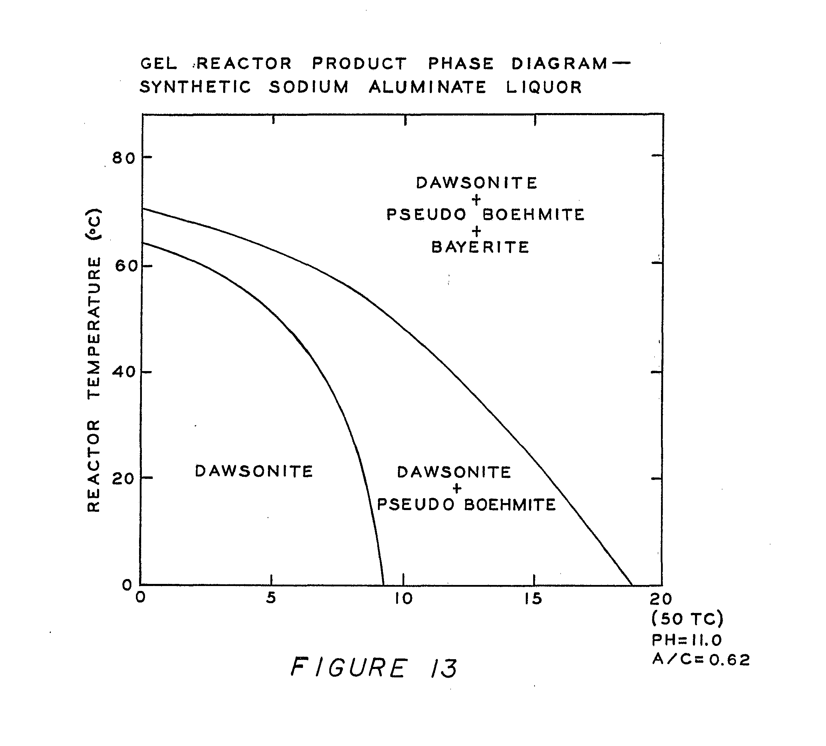

As previously stated, the neutralization reaction should operate in a pH range of from 8.5 to 12, depending upon the desired product. For example, a pH of from 8.5 to 10.2 should be maintained for a dawsonite product and about 12 for gibbsite. Operation of the process at a pH of 10.4 to 10.7, preferably about 10.5, will result in the production of an alumina gel principally comprised of pseudoboehmite. Figure 2 illustrates the effect of pH on the type of hydrate formed at various reaction temperatures and a residence time of 10 minutes. See also Figures 12 and 13.

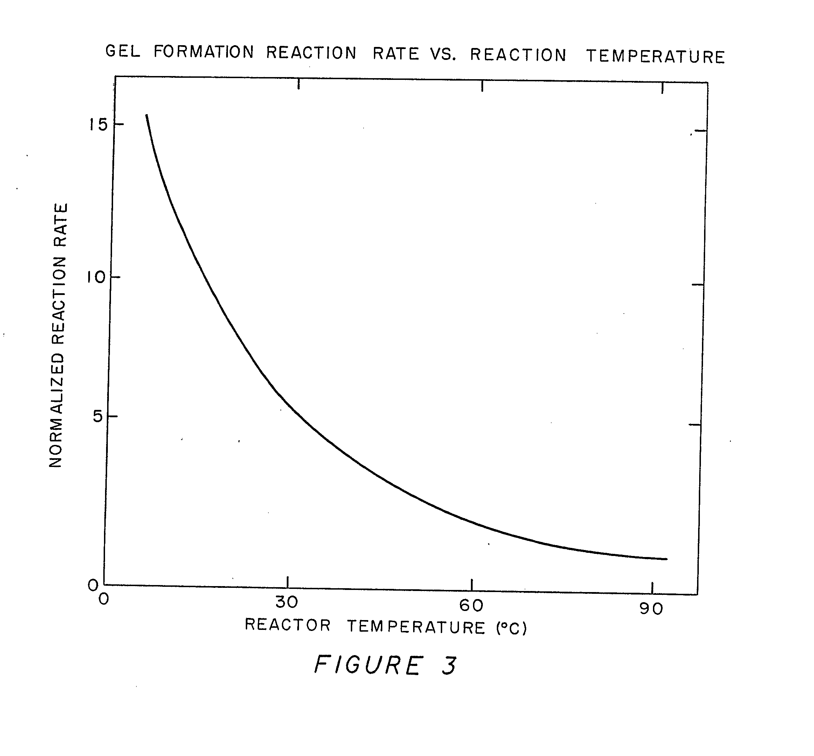

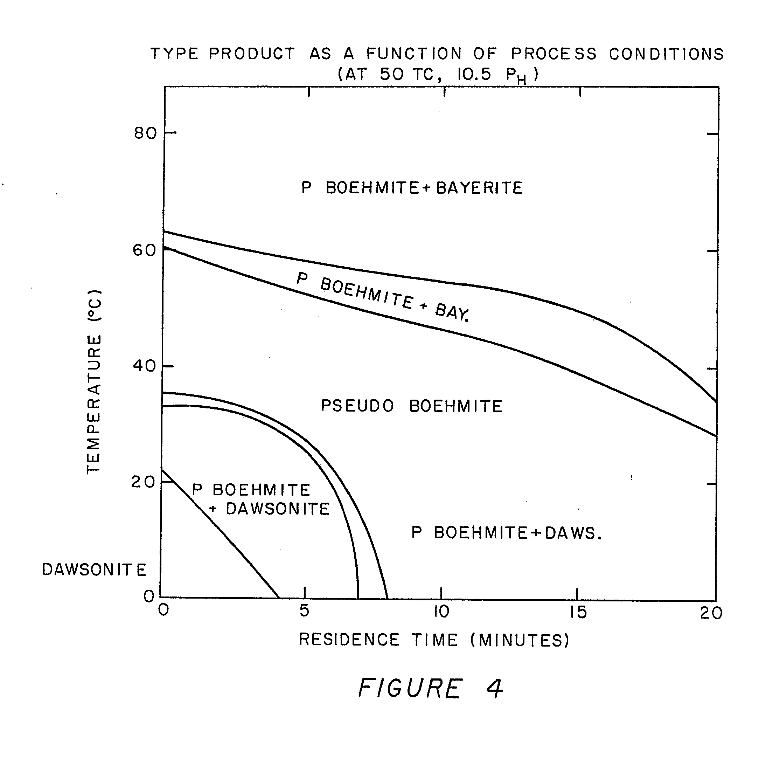

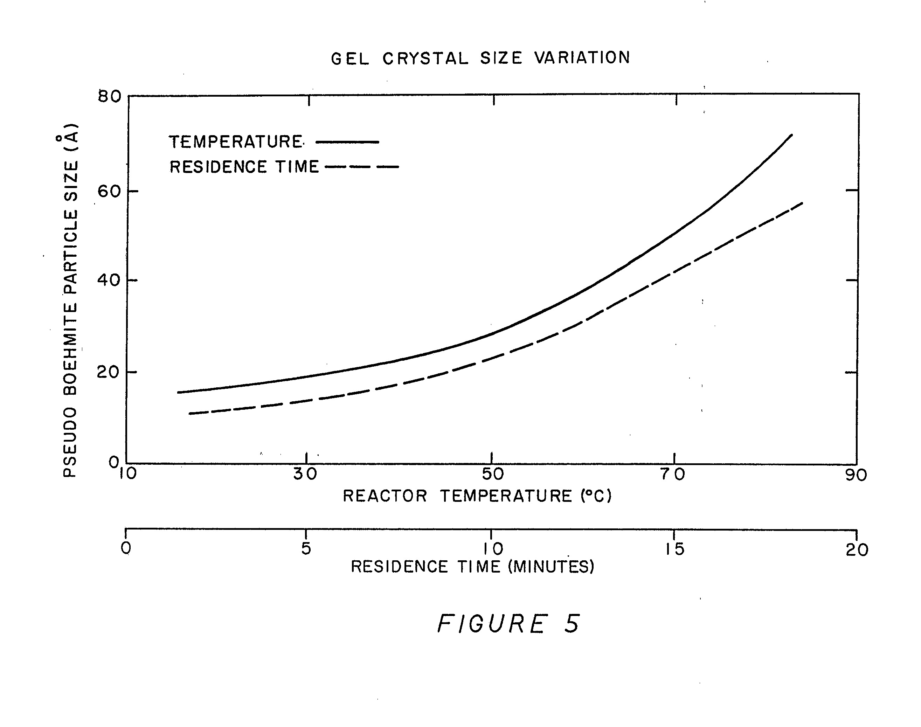

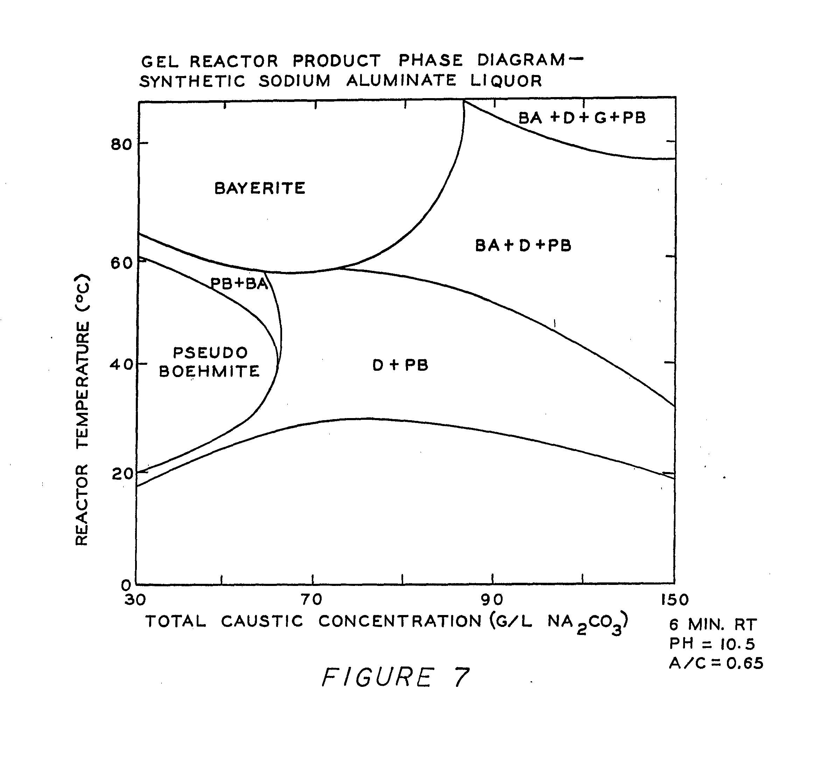

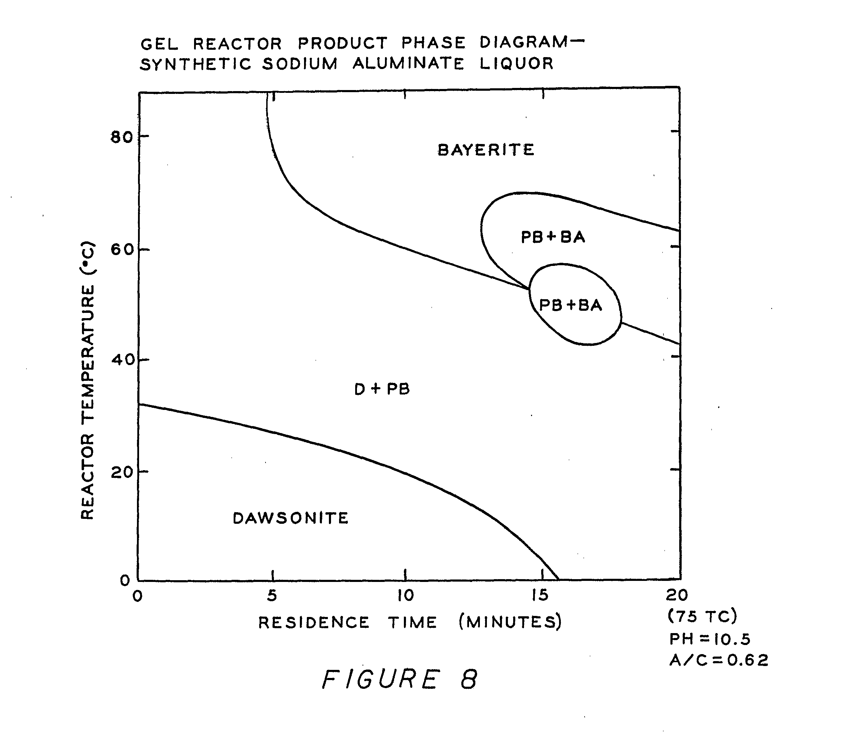

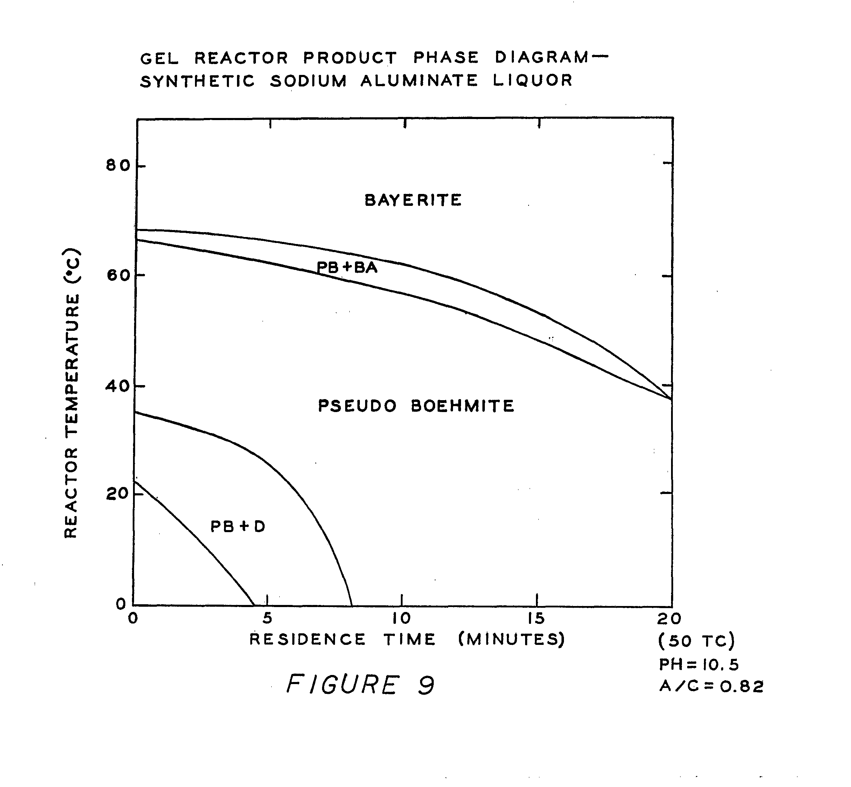

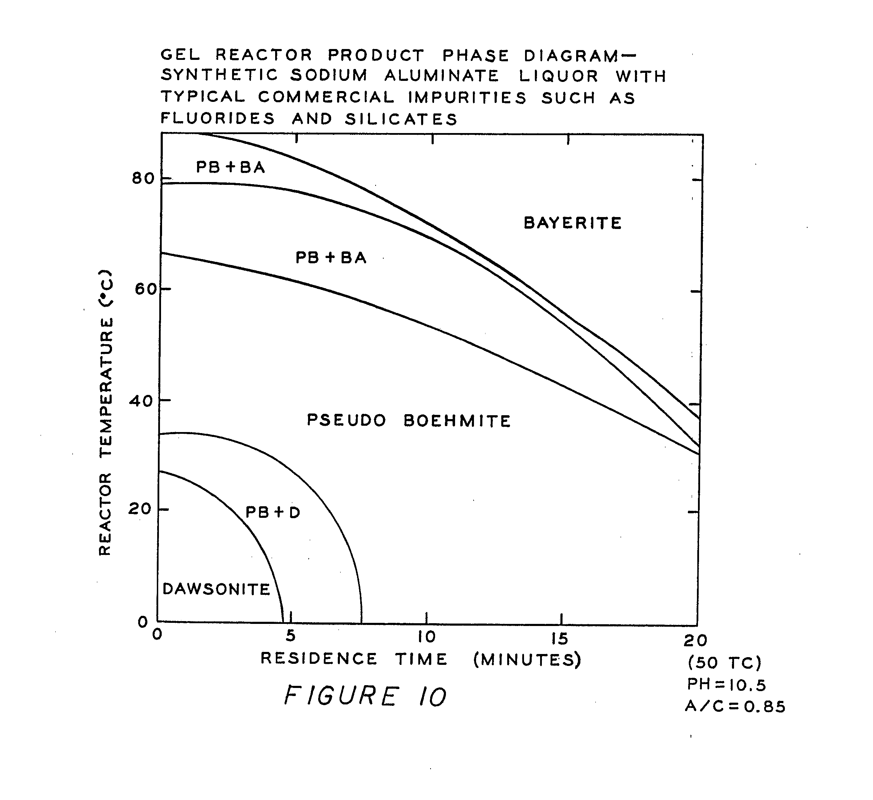

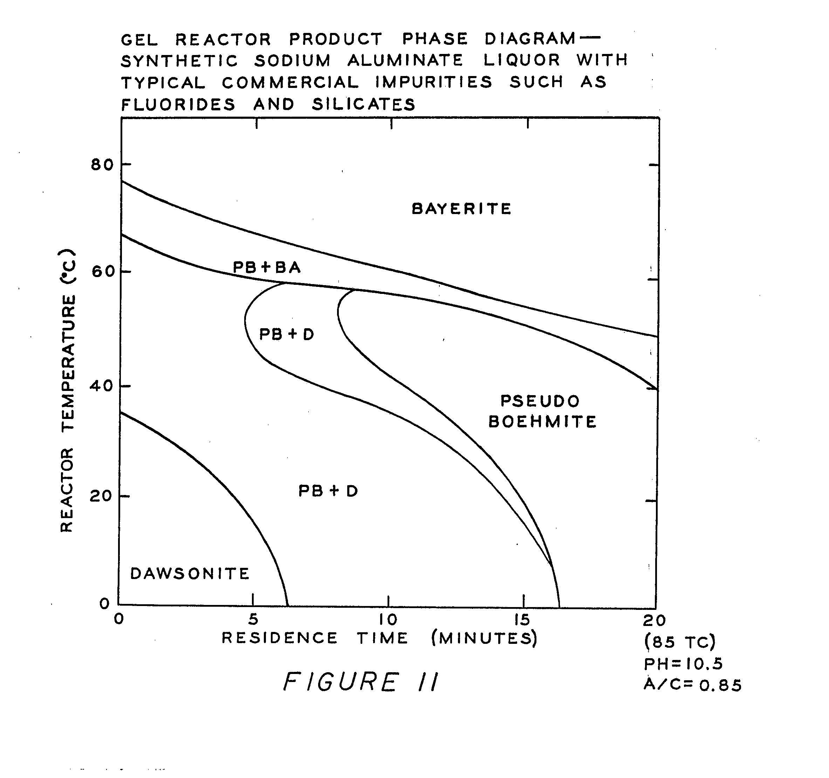

The reactor temperature should be maintained at from 0 to 90°C., preferably about 10 to 90°C., and most preferably about 50°C. Figures 3 and 4, as well as Figures 7 through 13, illustrate the effect of temperature on reaction rate of gel formation and type of gel formed. Figure 5 shows the effect of temperature and residence time on the crystal size of the gel with smaller sizes preferred due to the increased surface area. The production of pseudoboehmite alumina gel by the neutralization of an aluminate solution by carbon dioxide is a very exothermic process. Heat generation of about 288 BTUs/gallon of 50 gm/l total caustic liquor requires removal of heat on a continuous basis. Furthermore, laboratory experimentation has indicated that 55% of the total heat generated is the result of agitator viscous heat; about 34% of the heat is generated by the extremely exothermic process of the carbon dioxide absorption into the liquor solution; and the remaining heat is generated as a result of the chemical reaction between the carbon dioxide and sodium hydroxide present in the caustic liquor.

The exothermic heat produced in the reaction may be removed using a cold water heat exchanger comprising a jacket or circulating coils 30 mounted around the outside of the reactor, as shown in Figure 1, or coils located within the reactor, as shown in Figure 6. The heat may also be removed by precooling the inlet liquor stream to a temperature below 50°C. If a liquor stream temperature of about 35 to 40°C., preferably about 37°C., is used, all excess heat generated in the reaction may be removed. Combination of these cooling methods may also be used. The exothermic heat may also be removed or reduced by using cold carbon dioxide gas either alone or, preferably, in conjunction with other cooling means. The carbon dioxide may be cooled to a temperature of from 0 to -20°C. prior to injection into the reactor. While colder carbon dioxide would even be better from a cooling standpoint, temperatures below -20°C. should not be considered because of the possibility of certain amounts of dawsonite formation. This is due to the heat transfer from the bulk liquid to the carbon dioxide at such low temperatures which could result in regions of local equilibrium where the reaction interface was below 30°C. so that some dawsonite would appear. Alternatively, combinations of cooling and heating of the incoming reactants may be used.

As shown in Figure 1, reactor 2 may be cooled by circulating cooling water through coils or jacket members 30 which surround reactor 2. In Figure 6, cooling water passes through coils 30' located within reactor 2. In either case, the flow of cooling water passes through a valve 60 which controls the flow in response to a temperature monitor 62 located in line 14 which measures the temperature of the gel slurry as it leaves reactor 2. At the same time, the temperature of the carbon dioxide gas entering reactor 2 is monitored at 66. The temperature of the carbon dioxide gas is controlled by passing the gas through a heat exchanger 70. Water, at a temperature of 71°C. (160°F.), is passed through heat exchanger 70 to regulate the temperature of the carbon dioxide gas. The flow of water into heat exchanger 70 passes through valve 64 which is controlled by temperature sensor 66 to maintain the carbon dioxide gas at a temperature of 0 to 50°C., preferably) to 20°C.

The following example will serve to further illustrate the process of the invention.

### Example I

Into a bench reactor having a diameter of 0.55 feet and a height of 0.62 feet and fitted with a six blade shrouded turbine having an agitator diameter of 0.25 feet was fed, at a rate of 0.42 liters per minute, an aluminate solution having a concentration of 50 gm/l total caustic and an alumina ($Al_2O_3$)/caustic ratio of 0.84 or 42 grams per liter alumina. A residence time of six minutes was maintained. The pH of the reactor was maintained at 10.5 and the temperature at 50°C. A steady state flow of carbon dioxide of 5.8 liters per minute was fed into the reactor at a temperature of 0°C. The aluminate solution and carbon dioxide were agitated in the reactor by rotating the agitator at a rate of 853 rpm. The orifice size of the carbon dioxide sparger ring beneath the agitator at the bottom of the reactor was 7 mm using 20 openings circumferentially arranged around the sparger ring.

Thirty-six liters of alumina gel slurry was continuously removed from the reactor at a rate of 0.5 liters per minute. The slurry was filtered through Whatman #50 paper using a 24 centimeter diameter Buchner funnel producing four nominal cakes of three centimeters each. Each cake was then washed three times with 95°C. deionized water using 83.3 milliliters of water per liter of original slurry for each wash. After initial filtration, the resulting filter cakes were combined and repulped in deionized water to a final volume equalling the original slurry volume of 36 liters.  The repulping was done using a Dispersator mixer for two minutes at 6000 RPM.

This repulping was carried out twice with immediate filtering using a 41 centimeter diameter basket filter and SPD276Q filter cloth with washing in deionized water as in the initial washing.

After the intermediate washing and repulping treatments, the cake was finally repulped to a volume of 8 liters and 20 milliliters of galcial acetic acid added to obtain an acid adjustment to ph 8.

The washed gel cake was then placed in trays in a 110°C. air flow drying oven and heated for a time sufficient to reach a total water content in the range of 26 to 30%.  This was determined by calcining a 10 gram sample at 1100°C. to obtain the percentage of $Al_2O_3$ remaining after calcination and then calculating the targeted dry cake weight (T) necessary to satisfy the equation T =d GS/100-a, where:

G = Wet cake weight

S = Percentage of $Al_2O_3$ remaining after calcination

a = Target total weight loss.

Tables I, II and III show the results of chemical and physical properties of five batches prepared as described above.  Table IV shows two analyses of a blend of sample batches 1, 2, 4 and 5.

TABLE I

SUMMARY OF ANALYSES OF INDIVIDUAL BATCHES

| Sample | Weight Grams | (a) % Moisture | (b) % LOI | (c) % Total $H_2O$ | Surface Area $M^2/g$ | Crystalline Phase | (d) Crystalline Size, A° | (e) $Na_2O$ |
|---|---|---|---|---|---|---|---|---|
| 1 | 1319 | 2.69 | 29.7 | 31.6 | 475 | P.B. | 22 | 0.01 |
| 2 | 1251 | 2.01 | 25.9 | 27.3 | 463 | P.B. | 21 | 0.01 |
| 3 | 837 | 1.81 | 25.0 | 26.3 | 440 | P.B. | 22 | 0.19 |
| 4 | 1587 | 1.34 | 25.1 | 26.1 | 459 | P.B. | 22 | 0.022 |
| 5 | 1546 | 1.15 | 25.3 | 26.1 | 449 | P.B. | 22 | 0.03 |

(a) % Moisture = Weight Loss to 110°C.
(b) % LOI = Weight Loss 110 to 1100°C.
(c) % Total $H_2O$ = Weight Loss to 1100°C.
(d) Determined by XRD 1/2 width
(e) Hydrated Basis

TABLE II
Liquor Titrations

| Sample | Green Liquor, g/L | | | Spent Liquor g/L | | |
|---|---|---|---|---|---|---|
| | T. C. | $Na_2CO_3$ | $Al_2O_3$ | T. C. | $Na_2CO_3$ | $Al_2O_3$ |
| 1 | 49.82 | 5.30 | 42.84 | - | - | - |
| 2 | 50.35 | 9.54 | 43.01 | 6.36 | 42.4 | 10.2 |
| 3 | 45.58 | 4.24 | 43.86 | 0.80 | 44.52 | 2.68 |
| 4 | 49.80 | 2.12 | 43.5 | 4.12 | 42.4 | 4.61 |
| 5 | 53.00 | 2.12 | 44.9 | 2.12 | 38.2 | 7.31 |

TABLE III

pH Adjustment

| Sample | Original Slurry Volume, L | Final Repulp Volume, L | Volume Acid, mL | Final Repulp pH |
|--------|---------------------------|------------------------|-----------------|-----------------|
| 1 | 36 | 36 | 200 | 4.33 |
| 2 | 36 | 36 | 50 | 6.83 |
| 3 | 20 | 8 | 10 | 8.03 |
| 4 | 36 | 8 | 20 | 7.68 |
| 5 | 36 | 8 | 20 | 7.01 |

Acid = Glacial acetic acid

TABLE IV

PROPERTIES

| | Analysis 1 | Analysis 2 |
|---|-----------|-----------|
| Surface Area | 461 $m_2/g$ | 461 $m_2/g$ |
| % Moisture | 1.75% | 1.75% |
| % LOI | 26.4% | 26.4% |
| % Total $H_2O$ | 27.6% | 27.6% |
| XRD Phase | P.B. | P.B. |
| Crystallite Size | 22 A° | 22 A° |
| % $Na_2O$ | 0.036 | 0.039 |
| $SiO_2$ | .024 | .023 |
| $Fe_2O_3$ | .025 | .023 |
| $TiO_2$ | .003 | .003 |
| CaO | .013 | .013 |
| MgO | .001 | .001 |
| ZnO | .001 | .001 |
| CuO | .00 | .000 |
| $Ga_2O_3$ | .004 | .004 |
| $V_2O_5$ | .000 | .000 |
| NiO | .000 | .000 |
| MnO | .000 | .000 |
| $Cr_2O_3$ | .000 | .000 |
| $B_2O_3$ | .000 | .000 |
| $ZrO_2$ | .002 | .002 |
| $Li_2O$ | .000 | .000 |

The following examples will serve to further illustrate the process parameters of the invention.

### Example II

A sodium aluminate liquor having a total caustic (TC) concentration of 50 grams per liter (calculated as sodium carbonate) and an alumina to caustic ratio of .62 was neutralized to a pH of 10.5 by bubbling a carbon dioxide gas through the liquor during a 4 minute residence time in the reactor. The temperature of the liquor in the reactor was maintained at 50°C. during the neutralization reaction. The resulting gel product was filtered and washed within 15 minutes of the neutralization and then repulped and washed three times and the pH adjusted to 5. Formation of a pseudoboehmite product of about 15 Angstrom crystal size was indicated by X-ray diffraction. The sodium content of the pseudoboehmite crystals was 0.03% by weight sodium oxide. The surface area of the crystals was found to be 450 square meters per gram. It should be noted here that it was necessary to separate the gel from the mother liquor and wash it within about 15 minutes of formation of the gel to prevent the gel from aging to form dawsonite (sodium aluminum carbonate hydroxide).

### Example III

The procedure of Example II was repeated with the residence time extended to 6 minutes (slower reaction time). The resultant product was a pseudoboehmite having a surface area of 300-350 square meters per gram and a crystal size of 20-23 Angstroms.

### Example IV

The product of Example II was hydrothermally aged at 150-200°C. for 1 hour resulting in a pseudoboehmite having a surface area of 200 square meters per gram and a sodium content of 0.03% by weight sodium oxide.

### Example V

The procedure of Example II was repeated at a temperature of 70°C. for a period of 10 minutes. The resultant product was a 50-50 wt.% mixture of pseudoboehmite and well crystallized bayerite. Hydrothermal aging of the wet cake for 1 hour produced a pseudoboehmite of 45-50 Angstrom crystal size and a surface area of 200 square meters per gram when dried.

### Example VI

The procedure of Example II was repeated at a temperature of 20°C. and a residence time of 1 minute to produce a pure dawsonite.. The 0.5 micrometer powder was hydrothermally converted to a pseudoboehmite at 200-250°C. for 2 hours to yield a product having characteristics similar to the product of Example V.

### Example VII

An 85 gram per liter total caustic (TC) sodium aluminate liquor and an alumina to caustic ratio of 0.82 was neutralized with carbon dioxide gas during a 10 minute residence time in the reactor at 80°C. to a pH of 10.5. The resultant product, after filtering, washing and drying, was a pure, well crystallized bayerite with a crystal size of 500 Angstroms and a sodium impurity content of 0.05 percent by weight sodium oxide.

Thus, the invention provides a method for the continuous production of a preselected type of alumina gel such as pseudoboehmite by careful control of the process parameters including the structural aspects of the reactor components used in the process.

C L A I M S

1.        A process for the continuous production of an alumina gel product of preselected type which comprises:

    (a)  flowing into a reactor a sodium aluminate liquor having a preselected total caustic concentration and a preselected alumina to caustic ratio;

    (b)  maintaining the liquor in the reactor at a preselected temperature;

    (c)  contacting the liquor with a neutralizing agent capable of reacting with said caustic to lower the pH to a predetermined value and selected from the class consisting of a gas soluble in said sodium aluminate liquor and a liquid miscible with said sodium aluminate liquor; and

    (d)  continuously removing alumina gel from the reactor at a rate selected to provide a predetermined residence time; whereby a particular type of product may be produced, depending upon the caustic concentration, alumina to caustic ratio, reaction temperature, pH and residence time.

2.        The process of claim 1, wherein said neutralizing agent capable of reacting with said liquor to lower the pH is selected from the class consisting of HCl gas, $SO_2$ gas, $H_2S$ gas, $NO_2$ gas, $CO_2$ gas, sulfuric acid and nitric acid, and preferably said agent is $CO_2$ gas which is bubbled into said reactor.

3.        The process of claim 1 or 2, wherein the temperature of the reactants within said reactor is from 0 to 90°C., or from 10 to 90°C., and preferably the temperature range is, at least in part, maintained by: circulating a cooling fluid through a heat exchanger in thermal communication with the reactants, precooling the aluminate feed stream, or introducing carbon dioxide gas into the reactor at a temperature of not greater than 0°C.

4.        The process of any of claims 1 to 3, wherein the reactants have a residence time of from 0.5 to 30 minutes, or from 2 to 12 minutes, or about 4 to 6 minutes.

5.        The process of any of the preceding claims, wherein the caustic content of the aluminate stream, measured as sodium carbonate, is equivalent to 20 to 200 grams per liter at atmospheric pressure, preferably from 50 to 150 grams per liter.

6.      The process of any of the preceding claims, wherein the alumina to caustic ratio is from 3 to 9, preferably 0.5 to 0.8.

7.      Apparatus for the continuous production of alumina gel comprising:

(a)  a stirred reactor having an inlet including means for monitoring the pH of alumina/caustic liquor flowing into the reactor;

(b)  means for monitoring the pH of gel slurry leaving said reactor;

(c)  means for flowing a neutralizing agent into said reactor, including means for regulating the flow of said neutralizing agent in response to said pH monitoring means whereby the pH of the reactants within said reactor is maintained within a predetermined range;

(d)  means for monitoring the temperature of the reaction; and

(e)  temperature control means responsive to said monitoring means to maintain said reactor within a predetermined temperature range.

8.      The apparatus of claim 7, wherein said reactor has a height to diameter ratio not exceeding 1.3:1.

9.      The apparatus of claim 7 or 8, wherein said reactor is stirred by an agitator comprising a centrally mounted turbine, preferably said turbine being rotatable at a speed of from 480 to 1000 rpm.

10.      The apparatus of any of claims 7 to 9, wherein said means for flowing a neutralizing agent into said reactor comprises sparger means coaxially mounted beneath agitation means, preferably said sparger means being provided with a plurality of gas admitting orifices having a diameter of from .78 to 7 millimeters, wherein preferably the total area of said gas orifices in said sparger means does not exceed about 770 square millimeters.

FIGURE 1

GEL PRODUCT VARIATION WITH REACTION $P_H$

FIGURE 2

GEL FORMATION REACTION RATE VS. REACTION TEMPERATURE

*FIGURE 3*

TYPE PRODUCT AS A FUNCTION OF PROCESS CONDITIONS
(AT 50 TC, 10.5 $P_H$ )

FIGURE 4

GEL CRYSTAL SIZE VARIATION

*FIGURE 5*

FIGURE 6

GEL REACTOR PRODUCT PHASE DIAGRAM—
SYNTHETIC SODIUM ALUMINATE LIQUOR

BA +D + G+PB

BAYERITE

BA + D +PB

PB+BA

PSEUDO
BOEHMITE

D + PB

REACTOR TEMPERATURE (°C)

TOTAL CAUSTIC CONCENTRATION (G/L NA$_2$CO$_3$)

6 MIN. RT
PH = 10.5
A/C = 0.65

FIGURE 7

7/13

0147167

GEL REACTOR PRODUCT PHASE DIAGRAM—
SYNTHETIC SODIUM ALUMINATE LIQUOR

FIGURE 8

(75 TC)
PH = 10.5
A/C = 0.62

GEL REACTOR PRODUCT PHASE DIAGRAM—
SYNTHETIC SODIUM ALUMINATE LIQUOR

BAYERITE

PB+BA

PSEUDO BOEHMITE

PB+D

REACTOR TEMPERATURE (°C)

RESIDENCE TIME (MINUTES)

(50 TC)
PH=10.5
A/C=0.82

FIGURE 9

GEL REACTOR PRODUCT PHASE DIAGRAM—
SYNTHETIC SODIUM ALUMINATE LIQUOR WITH
TYPICAL COMMERCIAL IMPURITIES SUCH AS
FLUORIDES AND SILICATES

*FIGURE 10*

(50 TC)
PH=10.5
A/C=0.85

0147167

GEL REACTOR PRODUCT PHASE DIAGRAM—
SYNTHETIC SODIUM ALUMINATE LIQUOR WITH
TYPICAL COMMERCIAL IMPURITIES SUCH AS
FLUORIDES AND SILICATES

*FIGURE II*

(85 TC)
PH=10.5
A/C= 0.85

0147167

FIGURE 12

GEL REACTOR PRODUCT PHASE DIAGRAM—
SYNTHETIC SODIUM ALUMINATE LIQUOR

FIGURE 13

(50 TC)
PH=11.0
A/C=0.62

0147167